# EUROPÄISCHE PATENTSCHRIFT

(11) **EP 2 539 166 B1**
(45) Veröffentlichungstag und Bekanntmachung des Hinweises auf die Patenterteilung: **16.07.2014**
(21) Anmeldenummer: 11704960.1
(22) Anmeldetag: 14.02.2011
(51) Int. Cl.: B60J 3/02

(54) **PKW-SONNENSCHUTZEINRICHTUNG**
PASSENGER CAR SUNSHADE DEVICE
DISPOSITIF DE PROTECTION CONTRE LES RAYONS DU SOLEIL POUR VOITURE PARTICULIÈRE

(30) Priorität: 30.06.2010 DE 202010009658 U; 22.02.2010 DE 202010002612 U
(43) Veröffentlichungstag der Anmeldung: 02.01.2013
(73) Patentinhaber: Wieser, Karl, 9210 Pörtschach am Wörther See (AT)
(72) Erfinder: Wieser, Karl, 9210 Pörtschach am Wörther See (AT)
(74) Vertreter: Wirnsberger, Gernot
(86) Internationale Anmeldenummer: PCT/EP2011/052095
(87) Internationale Veröffentlichungsnummer: WO 2011/101302

(56) Entgegenhaltungen:
- EP-A1- 1 726 467
- DE-A1- 4 118 393
- DE-A1-102006 034 467
- DE-U1-202008 015 177
- FR-A1- 2 827 225
- FR-A1- 2 827 226
- US-A- 5 076 633
- US-A1- 2007 228 765

## Beschreibung

Die Erfindung betrifft eine Sonnenschutzeinrichtung, die im Bereich einer Windschutzscheibe eines Pkws anbringbar ist, um ein Blenden eines Fahrers oder Beifahrers zu verhindern. Eine Sonnenschutzeinrichtung wird beispielweise in der FR 2 827 226 beschrieben.

Des Weiteren betrifft die Erfindung einen Pkw mit einer derartigen Sonnenschutzeinrichtung.

Die in bekannten Pkws gegenwärtig eingebauten Sonnenblenden sind bei Bedarf manuell herunterzuklappen. Eine erforderliche Handbewegung benötigt zwar nur eine geringe Zeit, allerdings wird insbesondere ein Fahrer durch eine entsprechende Handbewegung vom Straßenverkehr abgelenkt, was zu einem Unfall führen kann. Bei großgewachsenen Menschen kommt überdies erschwerend hinzu, dass diese zusätzlich auch den Kopf zurückbewegen müssen, um die in der Regel schwenkbar an einer Innenverkleidung eines Pkws angebrachten Sonnenblenden zur Windschutzscheibe hin schwenken zu können, was ein zusätzliches Gefahrenpotenzial bedeutet. Es wurden zwar viele Vorschläge in diesem Zusammenhang gemacht, allerdings hat sich am Einsatz von Sonnenblenden mit Klappmechanismus bislang nichts geändert, da die einzelnen Vorschläge letztendlich nicht praktikabel und daher auch nicht umsetzbar waren.

Bei Cabriolets mit geöffnetem Dach kann besonders gut erkannt werden, wie nachteilig und verbesserungswürdig bestehende Systeme mit klappbaren Sonnenblenden sind. Selbst bei sehr teuren Autos besteht das ästhetische Problem, dass die Sonnenblenden wie Flügel über einem Verstrebungsbalken der Karosserie hervorragen. Grund hierfür ist, dass vom Verstrebungs- bzw. Stabilisierungsbalken weg nach vorne ein dünnes Blech vorgesehen sein muss, an welchem die Windschutzscheibe anzukleben ist. Die Sonnenblenden können allerdings erst hinter der Scheibe, also am Stabilisierungsbalken schwenkbar angeordnet werden. Die Sonnenblenden müssen dadurch relativ groß gefertigt werden, um zusätzlich den Bereich der Verklebung der Windschutzscheibe mit dem Blech abzudecken. Gleichzeitig stehen die Sonnenblenden dann um den entsprechenden Anteil weiter über den Stabilisierungsbalken vor, was ästhetisch unerwünscht, aber nicht vermeidbar ist.

Aufgabe der Erfindung ist es, eine Sonnenschutzeinrichtung der eingangs genannten Art anzugeben, mit welcher für einen Fahrer Ablenkungen vom Straßenverkehr verringert werden können und deren Bedienung erleichtert ist.

Diese Aufgabe wird erfindungsgemäß durch eine Sonnenschutzeinrichtung der eingangs genannten Art gelöst, welche eine Sonnenblende und einen mit der Sonnenblende in Verbindung stehenden Elektromotor umfasst, wobei die Sonnenblende durch den Elektromotor stufenlos ein- bzw. ausfahrbar und an einer beliebigen Stelle stoppbar ist.

Eine erfindungsgemäße Sonnenschutzeinrichtung kann mit Vorteil durch Knopfdruck am Lenkrad oder über Sprachsteuerung stufenlos ein- bzw. ausgefahren werden. Eine manuelle Betätigung einer Sonnenblende mit allen damit einhergehenden Nachteilen ist nicht mehr gegeben. Dabei kann die Sonnenblende je nach Einfallswinkel der Sonne an einer gewünschten Position gestoppt werden.

Von Vorteil ist auch, dass eine Dachinnenverkleidung eines Pkws nicht wie bisher für schwenkbare Sonnenblenden ausgebuchtet sein muss, sondern gegen eine Windschutzscheibe plan und durchgehend gleichmäßig dem Autodach anpassbar ist. Dies stellt eine Aufwertung eines Innenraumes dar, was insbesondere für hochwertige und teure Automarken interessant ist.

Vorteilhafte Varianten einer erfindungsgemäßen Sonnenschutzeinrichtung sind Gegenstand der abhängigen Ansprüche 2 bis 17.

Zweckmäßigerweise wird die erfindungsgemäße Sonnenschutzeinrichtung in Pkws bzw. allgemein Kraftfahrzeugen eingesetzt. Dabei kann vorgesehen sein, dass die Sonnenschutzeinrichtung zwischen einer Innenverkleidung und einem Autodach nicht sichtbar angebracht ist. Insbesondere kann dabei die Innenverkleidung eben bzw. ohne die bisher vorgesehenen Ausbuchtungen für Sonnenblenden ausgeführt sein, was ästhetisch zu einem verbesserten Erscheinungsbild und einer großen Aufwertung des Innenraumes führt.

Im Zusammenhang mit der Betätigung einer erfindungsgemäßen Sonnenschutzeinrichtung in einem Pkw ist vorteilhafterweise vorgesehen, dass die Sonnenblende durch Betätigung eines Schalters oder Knopfes und/oder durch Sprachsteuerung in eine gewünschte Position ein- bzw. ausfahrbar ist. Beispielsweise kann am Lenkrad ein Knopf oder Schalter für das Ein- bzw. Ausfahren der Sonnenblende vorgesehen sein.

Weitere Merkmale, Vorteile und Wirkungen der Erfindung ergeben sich anhand der nachfolgenden Darstellung eines Ausführungsbeispiels. In den Zeichnungen, auf welche dabei Bezug genommen wird, zeigen:
Fig. 1 einen Innenraum eines Fahrzeuges bzw. Pkws in schematischer Darstellung;
Fig. 2 eine schematische Darstellung einer erfindungsgemäßen Sonnenschutzeinrichtung in teilweise aufgeschnittener Darstellung;
Fig. 3 einen schematischen Querschnitt durch eine erfindungsgemäße Sonnenschutzeinrichtung;
Fig. 4 einen Querschnitt im Bereich IV gemäß Fig. 3.

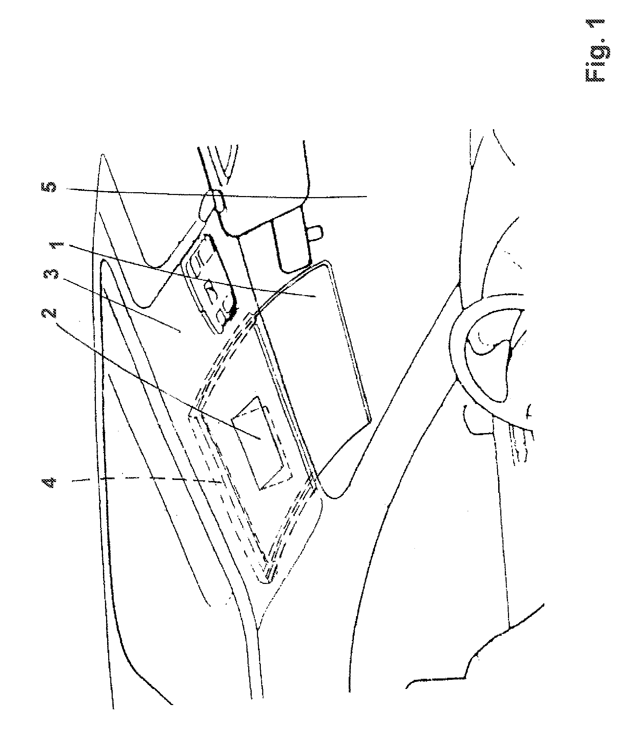

In Fig. 1 ist ein Innenraum eines Fahrzeuges bzw. Pkws schematisch dargestellt. Auf einer Fahrerseite ist eine erfindungsgemäße Sonnenschutzeinrichtung mit einer Sonnenblende 1 dargestellt bzw. eingebaut, während auf einer Beifahrerseite eine herkömmliche, manuell zu bedienende Einrichtung dargestellt ist. In Fig. 1 ist die Sonnenblende 1 in einer vollständig ausgefahrenen Position hinter einer Windschutzscheibe 5 gezeigt. Des Weiteren ist ersichtlich, dass ein Schminkspiegel 2 in einer Innenverkleidung 3 eingelassen sein kann und beispielsweise durch Schwenken in eine gewünschte Position bringbar ist.

Die in Fig. 1 dargestellte Sonnenschutzeinrichtung weist außenseitig eine Box 4 auf, welche neben der Sonnenblende 1 alle weiteren Komponenten beinhaltet, damit die Sonnenblende 1 bei Bedarf ein- bzw. ausfahrbar ist. Die Box 4 kann, wie in Fig. 1 ersichtlich, oberhalb der Innenverkleidung 3 angeordnet sein, sodass die Innenverkleidung 3 nahezu bis zur Windschutzschreibe 5 eben ausgeführt sein kann, was zu einem ästhetisch ansprechenden Erscheinungsbild im Innenraum des Pkws führt.

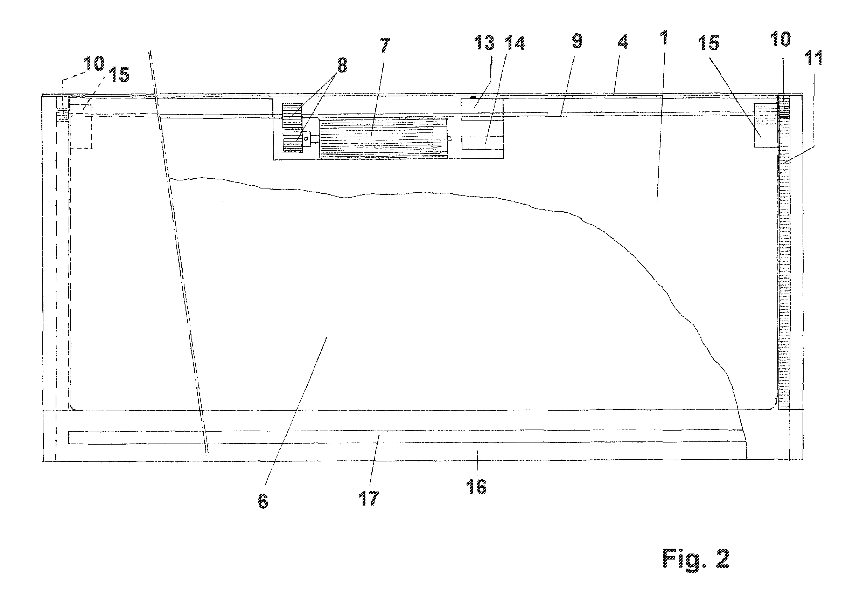

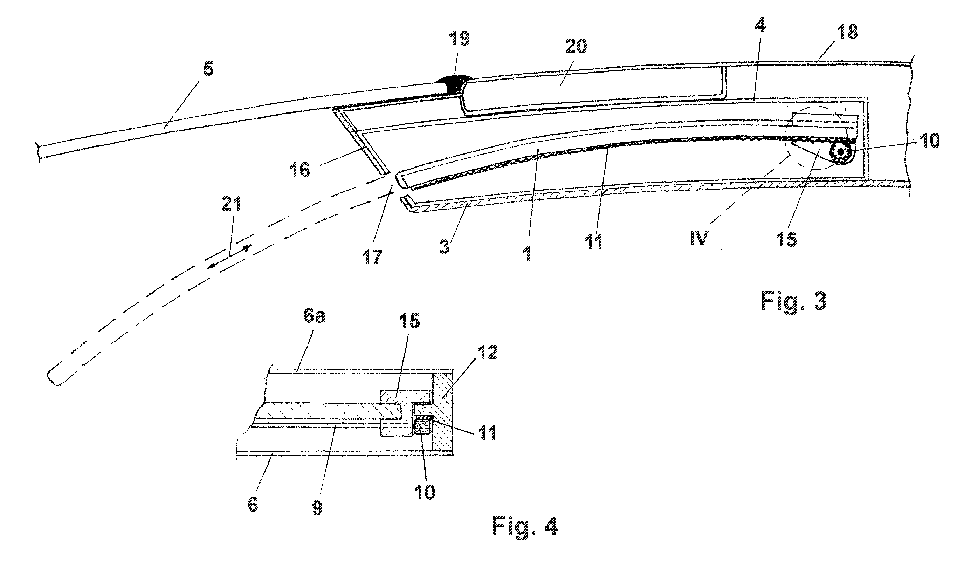

In Fig. 2 ist die Box 4 schematisch dargestellt, wobei die Box 4 teilweise aufgeschnitten ist, um einen Blick auf die einzelnen Komponenten freizugeben. Die Box 4 weist eine untere Abdeckung 6 und eine hierzu korrespondierende obere Abdeckung 6a auf, die durch seitliche Abdeckungen miteinander verbunden sind. Im Bereich einer vorderen Abdeckung 16 weist die in Draufsicht etwa rechteckig ausgebildete Box 4 eine schlitzförmige Öffnung 17 auf, durch welche die Sonnenblende 1 ausgefahren werden kann. Um ein Aus- bzw. späteres Einfahren der Sonnenblende 1 zu ermöglichen, ist diese mit einem Elektromotor 7 verbunden, wobei der Elektromotor 7 an der Sonnenblende 1 angebracht ist. Insbesondere kann der Elektromotor 7 an einem Ende einer hinteren Längsseite der Sonnenblende 1 angebracht sein, vorzugsweise mittig, sodass bei Bewegung der Sonnenblende 1 zusammen mit dem Elektromotor 7 eine möglichst ausgeglichene Gewichtsverteilung entlang einer Bewegungsrichtung gegeben ist. Der Elektromotor 7 steht mit einer Welle 9 in Wirkverbindung, sodass die Welle 9 in Drehbewegung versetzbar ist. Beispielsweise kann die Welle 9 mit dem Elektromotor 7 über Zahnräder 8 in Wirkverbindung stehen, um eine geeignete Übersetzung sicherzustellen. Die Welle 9 erstreckt sich über eine gesamte Längsseite der Sonnenblende 1 und ist endseitig bzw. links und rechts jeweils mit einem Zahnrad 10 bestückt. Diese Zahnräder 10 wirken, wie auch aus den Darstellungen in Fig. 3 und 4 hervorgeht, mit gerade verlaufenden Zahnriemen 11 zusammen, die an seitlichen Abdeckungen bzw. Seitenführungen 12 ortsfest angeordnet sind. Die Seitenführungen 12 weisen im Querschnitt etwa auf mittiger Höhe liegende Vorsprünge auf, wobei die Zahnriemen 11 bodenseitig angebracht sind, beispielsweise durch Verkleben. Zwischen den Seitenführungen 12 und der Sonnenblende 1 sind des Weiteren Führungselemente 15 vorgesehen. Diese Führungselemente 15 haben eine mehrfache Funktion: Zum einen umfassen die Führungselemente 15 die Sonnenblende 1 und halten diese in Position. Zum anderen halten die Führungselemente 15 aber auch die Welle 9 drehbar, wobei die Führungselemente 15 so ausgebildet sind, dass gemäß Fig. 4 die Zahnräder 10 mit den Zahnriemen 11 an einem bodenseitigen Ende der Vorsprünge der Seitenführungen 12 eingreifen, gleichzeitig jedoch die Führungselemente 15 kopfseitig an den Vorsprüngen der Seitenführungen 12 anliegen. Dadurch ist eine hohe Stabilität bei Bewegung der Sonnenblende 1 gewährleistet. Die Führungselemente 15 sind grundsätzlich aus einem Kunststoff gebildet, insbesondere aus einem selbstschmierenden Kunststoff, damit die Bewegung der Sonnenblende 1 mit möglichst geringem Kraftaufwand erfolgen kann.

Wie aus Fig. 2 ebenfalls ersichtlich ist, sind zwei Endschalter 13, 14 vorgesehen, durch welche im Zusammenwirken mit dem Elektromotor 7 maximale Positionen der Sonnenblende 1 begrenzt werden.

In Fig. 3, auf welche bereits Bezug genommen wurde, ist insbesondere auch ersichtlich, dass die Box 4 unterhalb einer Karosserieverstrebung 20 zwischen einem Autodach 18 und der Innenverkleidung 3 angebracht werden kann. Die Windschutzscheibe 5 läuft bis zur Karosserieverstrebung 20 und ist dort mit einer Dichtung 19 mit den übrigen Teilen verbunden. Wird die Sonnenblende 1 ausgefahren, so wird durch den Elektromotor 7 die Welle 9 in Drehbewegung versetzt, sodass die Zahnräder 10 an den Zahnriemen 11 vorarbeiten, bis eine gewünschte Position der Sonnenblende 1 erreicht ist, beispielsweise der in Fig. 3 angedeutete Vollauszug.

Die Sonnenblende 1 ist dabei bevorzugt gewölbt, sodass durch die Bewegung der Sonnenblende 1 entlang der Pfeilrichtung 21 stets ein bestimmter Abstand zur Windschutzscheibe 5 gegeben ist bzw. die Sonnenblende 1 nicht anliegt. Eine Betätigung der Sonnenblende 1 erfolgt vorzugsweise mittels Knopfdruck oder durch Sprachsteuerung. Hierzu können beispielsweise am Lenkrad geeignete Komponenten vorgesehen sein. Die Bewegung der Sonnenblende 1 ist besonders gleichmäßig, da zwei Zahnriemen 11 und zwei damit zusammenwirkende Zahnräder 10 an jedem Ende der Welle 9 vorgesehen sind. Grundsätzlich ist es aber auch möglich, dass bloß ein einziger Zahnriemen 11 oder eine Zahnstange sowie ein Zahnrad 10 vorgesehen sind.

Die Sonnenblende 1 kann aus verschiedenen Materialien hergestellt sein, beispielsweise Kunststoff, getöntem Plexiglas oder anderen Materialien, ohne dass eine Funktion beeinträchtigt wäre.

Im Rahmen der Erfindung können auch andere Führungsmechanismen und Antriebe vorgesehen werden, die es ermöglichen, die Sonnenblende 1 durch die Öffnung 17 der vorderen Abdeckung stufenlos ein- bzw. auszufahren und an einer beliebigen Stelle, innerhalb von Maximalpositionen (voller Auszug bzw. voller Einschub) zu stoppen.

Ein Einbau der Sonnenblende in einer eigenen Box 4 ist nicht zwingend, erlaubt es aber, die Sonnenschutzeinrichtung vollständig vorzufertigen und in verschiedenen Modellen zu verbauen. Auch in Bezug auf Wartungseingriffe kann es vorteilhaft sein, wenn alle Komponenten einer erfindungsgemäßen Sonnenschutzeinrichtung in einer Box 4 konzentriert sind. Erforderlich ist selbstverständlich für die Steuerung die Verbindung mit einem Schalter, Knopf und/oder Sensor im Bereich des Innenraumes eines Pkws.

## Patentansprüche

1. Sonnenschutzeinrichtung, die im Bereich einer Windschutzscheibe (5) eines Pkws anbringbar ist, um ein Blenden eines Fahrers oder Beifahrers zu verhindern, umfassend eine Sonnenblende (1) und einen mit der Sonnenblende (1) in Verbindung stehenden Elektromotor (7), wobei die Sonnenblende (1) durch den Elektromotor (7) stufenlos ein-bzw. ausfahrbar und an einer beliebigen Stelle stoppbar ist, **dadurch gekennzeichnet, dass** der Elektromotor (7) an der Sonnenblende (1) angebracht ist.

2. Sonnenschutzeinrichtung nach Anspruch 1, wobei der Elektromotor (7) an einem Ende einer hinteren Längsseite der Sonnenblende (1), vorzugsweise mittig, angebracht ist.

3. Sonnenschutzeinrichtung nach Anspruch 1 oder 2, wobei eine Welle (9) vorgesehen ist, die mit dem Elektromotor (7) in Wirkverbindung steht, sodass die Welle (9) von diesem in Drehbewegung versetzbar ist, und an der Welle (9) zumindest ein Zahnrad (10) angeordnet ist, das in einen ortsfesten Zahnriemen (11) oder eine ortsfeste Zahnstange eingreift.

4. Sonnenschutzeinrichtung nach Anspruch 3, wobei zwei Zahnräder (10) vorgesehen sind, die endseitig an der Welle (9) angeordnet sind.

5. Sonnenschutzeinrichtung nach Anspruch 3 oder 4, wobei sich die Welle (9) über eine Längsseite der Sonnenblende (1) erstreckt und die Zahnräder (10) neben der Sonnenblende (1) angeordnet sind.

6. Sonnenschutzeinrichtung nach einem der Ansprüche 3 bis 5, wobei zwei ortsfeste Zahnriemen (11) vorgesehen sind, in welche zwei Zahnräder (10) eingreifen.

7. Sonnenschutzeinrichtung nach Anspruch 6, wobei die Zahnriemen (11) parallel zu einer Querseite der Sonnenblende (1) verlaufen und vorzugsweise etwa eine der Querseite entsprechende Länge aufweisen.

8. Sonnenschutzeinrichtung nach einem der Ansprüche 3 bis 7, wobei zumindest ein Führungselement (15) vorgesehen ist, in welchem die Welle (9) drehbar gehalten ist.

9. Sonnenschutzeinrichtung nach einem der Ansprüche 1 bis 8, wobei zwei Endschalter (13, 14) vorgesehen sind, welche einen maximalen Einzug bzw. Auszug begrenzen.

10. Sonnenschutzeinrichtung nach einem der Ansprüche 1 bis 9, wobei die Sonnenblende (1) eine Wölbung aufweist.

11. Sonnenschutzeinrichtung nach einem der Ansprüche 1 bis 10, wobei außenseitig eine Box (4) mit einer Öffnung (17) vorgesehen ist, durch welche die Sonnenblende (21) zur Windschutzscheibe (5) hin ausfahrbar ist.

12. Kraftfahrzeug, insbesondere Pkw, mit einer Sonnenschutzeinrichtung nach einem der Ansprüche 1 bis 11.

13. Kraftfahrzeug nach Anspruch 12, wobei die Sonnenschutzeinrichtung zwischen einer Innenverkleidung (3) und einem Autodach (18) nicht sichtbar angeordnet ist.

14. Kraftfahrzeug nach Anspruch 12 oder 13, wobei die Sonnenblende (1) durch Betätigung eines Schalters oder Knopfes und/oder durch Sprachsteuerung in eine gewünschte Position ein- bzw. ausfahrbar ist.

## Claims

1. Sun protection device which can be attached to the windscreen (5) area of a private car in order to prevent dazzling of a driver or passenger, comprising a sun visor (1) and an electric motor (7) which is in connection with the sun visor (1), wherein by means of the electric motor (7), the sun visor (1) can be continuously retracted and extended and stopped at any point, **characterised in that** the electric motor (7) is arranged on the sun visor (1).

2. Sun protection device according to claim 1, wherein the electric motor (7) is arranged at one end of a rear longitudinal side of the sun visor (1), preferably centrally.

3. Sun protection device according to claim 1 or 2 wherein a shaft (9) is provided which is in effective connection with the electric motor (7) so that the shaft (9) can be rotated thereby, and on the shaft (9) at least one gearwheel (10) is arranged that engages in a fixed toothed belt (11) or in a fixed toothed rack.

4. Sun protection device according to claim 3, wherein two gearwheels (10) are provided which are arranged on the end of the shaft (9).

5. Sun protection device according to claim 3 or 4 wherein the shaft (9) extends over a longitudinal side of the sun visor (1) and the gearwheels (10) are arranged alongside the sun visor (1).

6. Sun protection device according to any one of claims 3 to 5, wherein two fixed toothed belts (11) are provided, into which two gearwheels (10) engage.

7. Sun protection device according to claim 6, wherein the toothed belts (11) run in parallel to a lateral side of the sun visor (1) and are preferably of a length corresponding to a lateral side.

8. Sun protection device according to any one of claims 3 to 7, wherein at least one guide element (15) is provided in which the shaft (9) is borne in a rotatable manner.

9. Sun protection device according to any one of claims 1 to 8, wherein two limit switches (13, 14) are provided which respectively limit maximum retraction and extension.

10. Sun protection device according to any one of claims 1 to 8 wherein the sun visor (1) is curved.

11. Sun protection device according to any one of claims 1 to 10, wherein externally a box (4) with an opening (17) is provided through which the sun visor (21) can be extended as far as the windscreen (5).

12. Vehicle, more particularly a private car, with a sun protection device according to any one of claims 1 to 11.

13. Vehicle according to claim 12, wherein the sun protection device is arranged in a non-visible manner between an internal cladding (3) and a car roof (18).

14. Vehicle according to claim 12 or 13, wherein the sun visor (1) can be retracted or extended into a desired position by operating a switch or button and/or through voice control.

## Revendications

1. Système de protection solaire qui peut se monter dans la zone du pare-brise (5) d'un véhicule de tourisme, pour éviter un éblouissement d'un conducteur ou d'un passager, comprenant un pare-soleil (1) et un moteur électrique (7) qui est en liaison avec le pare-soleil (1), le pare-soleil (1) pouvant être déployé en continu et arrêté en un endroit quelconque, **caractérisé en ce que** le moteur électrique (7) est monté sur le pare-soleil (1).

2. Système de protection solaire selon la revendication 1, le moteur électrique (7) étant monté sur une extrémité d'un côté longitudinal arrière du pare-soleil (1), de préférence au centre.

3. Système de protection solaire selon la revendication 1 ou la revendication 2, un arbre (9) étant prévu qui est en liaison active avec le moteur électrique (7), de sorte que l'arbre (9) puisse être amené en mouvement rotatif par ce dernier et sur l'arbre (9) étant placé au moins une roue dentée (10) qui s'engage dans une courroie dentée (11) stationnaire ou dans une crémaillère stationnaire.

4. Système de protection solaire selon la revendication 3, deux roues dentées (10) étant prévues qui sont placées du côté extrémité sur l'arbre (9).

5. Système de protection solaire selon la revendication 3 ou 4, l'arbre (9) s'étendant sur un côté longitudinal du pare-soleil (1) et les roues dentées (10) étant placées à côté du pare-soleil (1).

6. Système de protection solaire selon l'une quelconque des revendications 3 à 5, deux courroies dentées (11) stationnaires étant prévues, dans lesquelles s'engagent deux roues dentées (10).

7. Système de protection solaire selon la revendication 6, les courroies dentées (11) s'étendant à la parallèle d'un côté transversal du pare-soleil (1) et présentant de préférence une longueur correspondant approximativement au côté transversal.

8. Système de protection solaire selon l'une quelconque des revendications 3 à 7, au moins un élément de guidage (15) étant prévu dans lequel l'arbre (9) est maintenu de manière rotative.

9. Système de protection solaire selon l'une quelconque des revendications 1 à 8, deux fins de courses (13, 14) étant prévus qui délimitent une rentrée ou une sortie maximale.

10. Système de protection solaire selon l'une quelconque des revendications 1 à 9, le pare-soleil (1) comportant une courbure.

11. Système de protection solaire selon l'une quelconque des revendications 1 à 10, sur la face extérieure étant prévue une boîte (4) avec une ouverture (17) à travers laquelle le pare-soleil (21) est déployable en direction du pare-brise (5).

12. Véhicule automobile, notamment véhicule de tourisme avec un système de protection solaire selon l'une quelconque des revendications 1 à 11.

13. Véhicule automobile selon la revendication 12, le système de protection solaire étant placé de manière invisible entre un habillage intérieur (3) et un toit de voiture (18).

14. Véhicule automobile selon la revendication 12 ou la revendication 13, le pare-soleil (1) étant escamotable ou déployable dans une position souhaitée par manoeuvre d'un commutateur ou d'un bouton et/ou par commande vocale.
